(19)

Europäisches
Patentamt
European
Patent Office
Office européen
des brevets

(11) **EP 4 116 580 A1**

(12) **EUROPEAN PATENT APPLICATION**

(43) Date of publication:
**11.01.2023 Bulletin 2023/02**

(21) Application number: **22183062.3**

(22) Date of filing: **05.07.2022**

(51) International Patent Classification (IPC):
*F03D 13/20* (2016.01)    *F03D 7/04* (2006.01)
*F03D 13/25* (2016.01)

(52) Cooperative Patent Classification (CPC):
F03D 13/25; **E02D 27/425; E04H 12/00;**
**F03D 7/0204; F03D 13/20;** B63B 2035/446;
E02B 2017/0065; F05B 2240/93; F05B 2240/95;
F05B 2270/32; F05B 2270/321

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **05.07.2021   CN 202110756921**
         **31.03.2022   CN 202210343916**

(71) Applicant: **NingBo Advanced Information**
**Services Co., Ltd.**
**Ningbo, Zhejiang Province (CN)**

(72) Inventors:
• **LI, Wenlong**
  **Canton, 48187 (US)**
• **LIANG, Tao**
  **Ningbo (CN)**

(74) Representative: **Bayramoglu et al.**
**Mira Office**
**Kanuni Sultan Süleyman Boulevard 5387**
**Street Beytepe, floor 12, no:50**
**06800 Cankaya, Ankara (TR)**

(54) **WIND GENERATOR AND WIND GENERATOR GROUP**

(57)    The present invention discloses a wind generator and a wind generator group. The wind generator comprises a revolving platform, rotationally connected with a base; a tower body, wherein the bottom end of the tower body is connected to the revolving platform, the top end of the tower body is fixedly provided with a generator room, a plurality of blades are rotationally connected to the generator room through a wheel hub, the tower body has at least one windward side in the circumferential direction of the tower body, and the bending stiffness of the windward side is not less than that of the remaining sides of the tower body; and a power source, used for changing the windward direction of the blades, wherein the power source is started when airflow is to the sides rather than the windward side to enable the airflow to flow to the windward side while the windward direction of the blades coincides with the airflow.

FIG.1

## Description

### TECHNICAL FIELD

The present invention belongs to the field of wind generators, and particularly relates to a wind generator and a wind generator group.

### BACKGROUND

The tower body of a traditional wind generator is fixed on a stationary platform and rotationally connected with the generator room. Due to the randomness of airflow direction, the tower body will bear the maximum possible load in each direction, resulting in large weight of the tower body, complex structure of the connecting part of the generator room and the tower body, and high cost.

### SUMMARY

The present invention provides a wind generator, comprising a revolving platform, rotationally connected with a base; a tower body, wherein the bottom end of the tower body is connected to the revolving platform, the top end of the tower body is fixedly provided with a generator room, a plurality of blades are rotationally connected to the generator room through a wheel hub, the tower body has at least one windward side in the circumferential direction of the tower body, and the bending stiffness of the windward side is not less than that of the remaining sides (rather than the windward side) of the tower body; and a power source, used for changing the windward direction of the blades, wherein the power source is started when airflow is to the sides rather than the windward side to enable the airflow to flow to the windward side while the windward direction of the blades coincides with the airflow.

The tower body is fixedly connected with the generator room, which can simplify the connecting structure, the tower body is designed to have a windward side with maximum bending stiffness, and meanwhile, the tower body drives the revolving platform to rotate relative to the base. After the airflow direction changes, the tower body is turned so that the airflow always flows towards the windward side of the tower body. Therefore, the stiffness of the other sides of the tower body can be reduced appropriately according to the actual usage so as to reduce the sizes of the other sides of the tower body, the weight and size of the tower body, and the manufacturing and installation cost.

In the present invention, the blades can be arranged on the downwind side, airflow is used to blow the blades to drive the tower body to rotate, realizing yaw of wind power as a power source, the yaw structure of a traditional wind generator can be canceled, reducing the cost and the design of complex structures, and combined with the design of a pretensioning member on the weather side, tension generated by the pretensioning member can offset part of the bending moment caused by wind power on the tower body, reduce the load of the tower body, reduce the weight of the tower body, enhance the stability of the tower body, improve the stress state of the cross section of the tower body under wind load, and enhance the stiffness and strength of the whole structure of the wind generator.

The wind generator of the present invention is suitable for group arrangement, especially on the sea, the revolving platform is designed as a floatable structure and provided with an airtight cavity inside, which reduces the total weight and cost of the generator group on the basis of ensuring the support performance, and the revolving platform is restricted in the designed position through the base, which can meet the basic rotation demand of the revolving platform, balance and stabilize the supporting platform to a certain extent, and enhance the support stability of the wind generator.

The specific embodiments of the present invention will be further described below in detail in conjunction with the accompanying drawings.

### DESCRIPTION OF DRAWINGS

Drawings, as part of the present invention, are used for providing further understanding of the present invention. Exemplary embodiments of the present invention and the description are used for explaining the present invention, but do not constitute a limitation to the present invention. Apparently, the drawings in the following description are merely some embodiments, and for those ordinary skill in the art, other drawings can also be obtained according to the drawings without contributing creative labor. In the figures:

Fig. 1 is a schematic diagram of a stereographic structure of a wind generator in one embodiment of the present invention;

Fig. 2 is a sectional view of a tower body with a rectangular cross section of the present invention;

Fig. 3 is a sectional view of a tower body with an I-shaped cross section of the present invention;

Fig. 4 is a sectional view of a tower body with an oval cross section of the present invention;

Fig. 5 is a sectional view of a tower body with another oval cross section of the present invention;

Fig. 6 is a sectional view of an integral structure of a tower body and a diversion member of the present invention;

Fig. 7 is a sectional view of a frame structure of a tower body of the present invention;

Fig. 8 is a schematic diagram of force analysis of a tower body with a rectangular cross section of the present invention;

Fig. 9 is a top view of a generator room of a tower body with a rectangular cross section of the present invention;

Fig. 10 is a schematic diagram of a driving structure of a driving motor as a power source of the present invention;

Fig. 11 is a schematic diagram of a stereographic structure of a wind generator in another embodiment of the present invention;

Fig. 12 is a side view of Fig. 11;

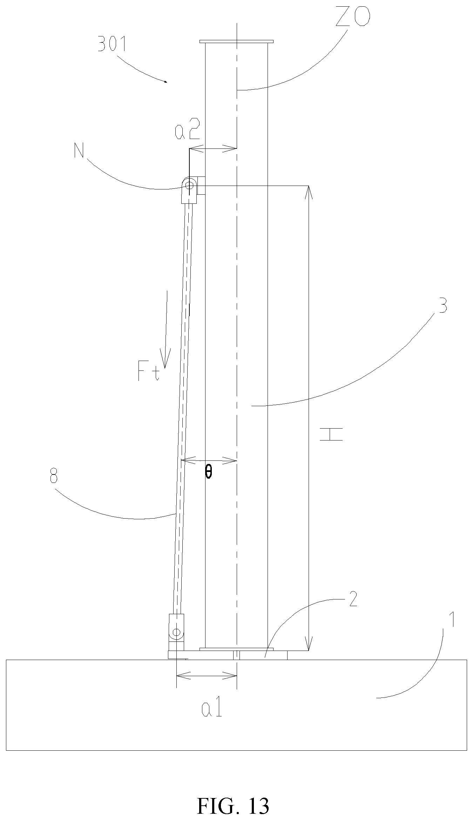

] Fig. 13 is a schematic diagram of arrangement of a pretensioning member of the present invention;

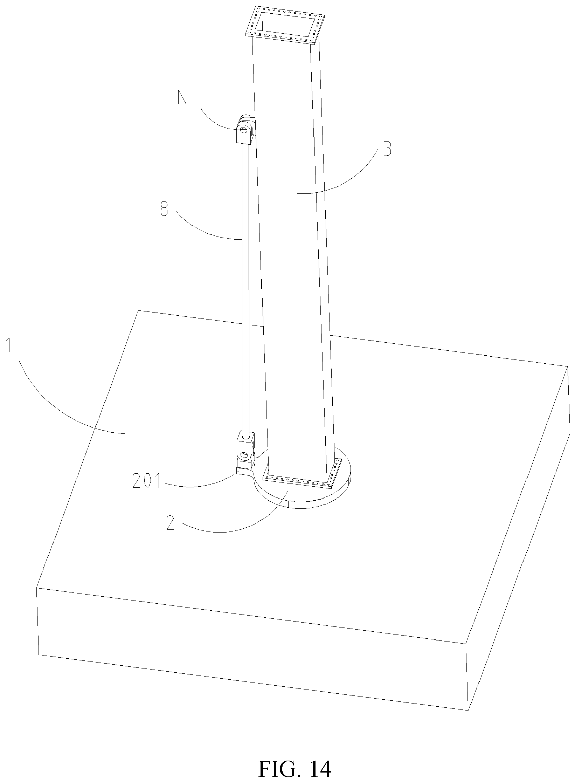

Fig. 14 is a schematic diagram of bottom installation of a pretensioning member of the present invention;

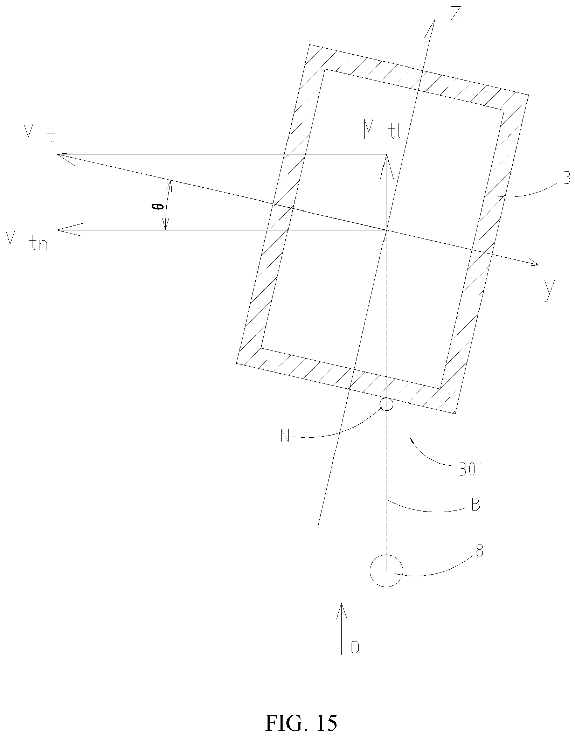

Fig. 15 is an analysis chart of arrangement of a pretensioning member of the present invention and wind axis;

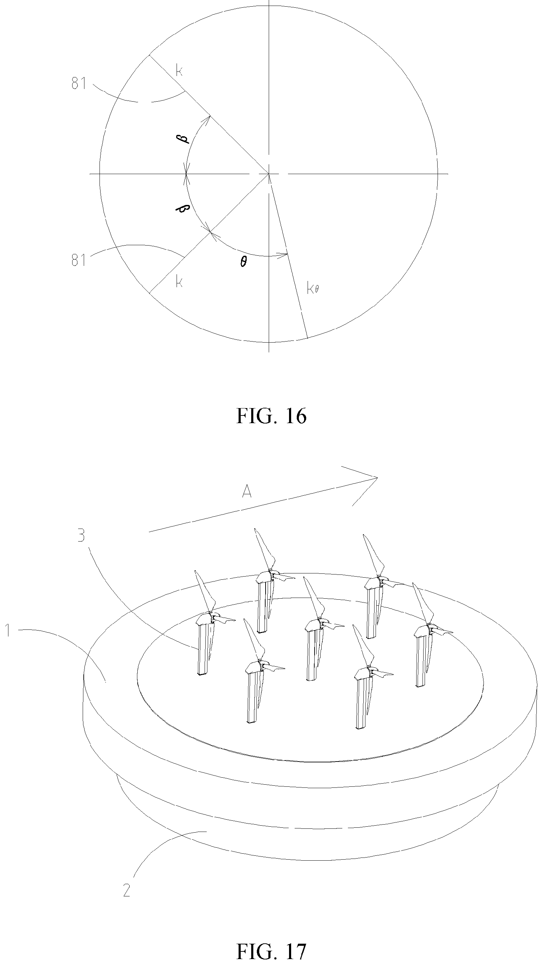

Fig. 16 is a schematic diagram of equivalent rigidity of two pretensioning steel ropes of the present invention;

Fig. 17 is a schematic diagram of a stereographic structure of one embodiment of a generator group of the present invention;

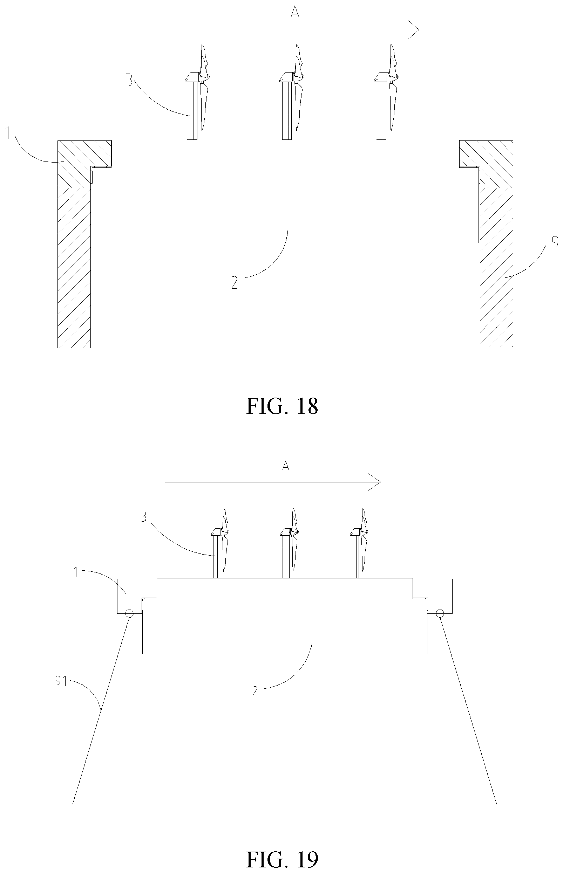

Fig. 18 is a schematic diagram of rigid connection of a revolving platform of the present invention;

Fig. 19 is a schematic diagram of flexible connection of a revolving platform of the present invention;

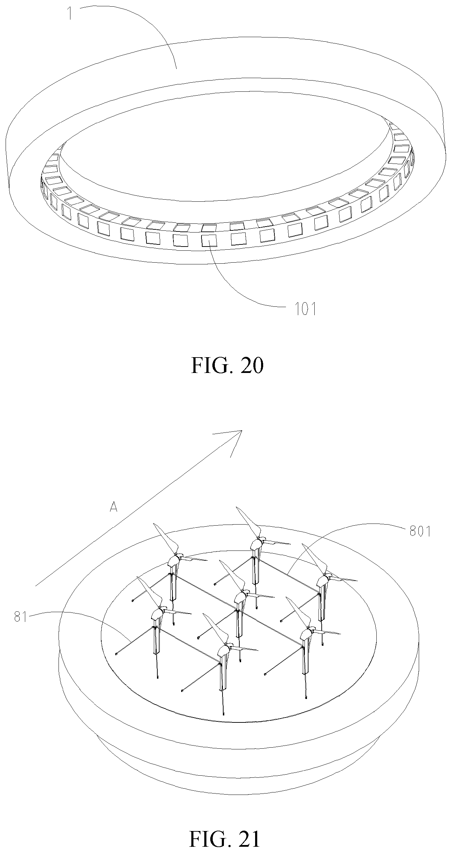

Fig. 20 is a schematic diagram of arrangement of sliding countervanes of the present invention;

Fig. 21 is a schematic diagram of distribution of connecting assemblies of the present invention;

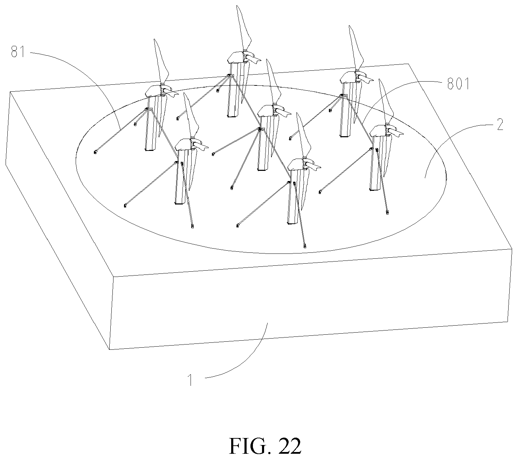

Fig. 22 is a schematic diagram of a stereographic structure of another embodiment of a generator group of the present invention.

In the figures: 1. base; 2. revolving platform; 3. tower body; 4. generator room; 5. wheel hub; 6. blade; 7. power source; 8. pretensioning member; 9. fixed structure; 10. detection member; 101. sliding countervane; 31. frame; 32. metal plate; 301. windward side; 302. diversion member; 601. weather side; 602. downwind side; 71. driving gear; 72. matching gear ring; 73. driving motor; 81. steel rope; 801. connecting assembly; 91. anchor cable; Q. airflow thrust; A. airflow direction; Z. first main axis; y. second main axis; N. pretensioning point; ZO. second main axis plane; 201. extending support edge; and B. wind axis.

It should be noted that these drawings and text description are not intended to limit the conception scope of the present invention in any way, but to explain the concept of the present invention to those skilled in the art by referring to specific embodiments.

**Detailed Description**

To make a purpose, a technical solution and advantages of the embodiments of the present invention more clear, the technical solution in the embodiments will be clearly and fully described below in combination with the drawings in the embodiments of the present invention. The following embodiments are only used for illustrating the present invention, not used for limiting the scope of the present invention.

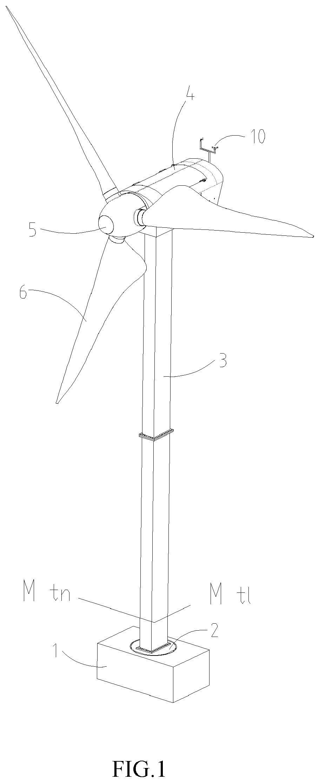

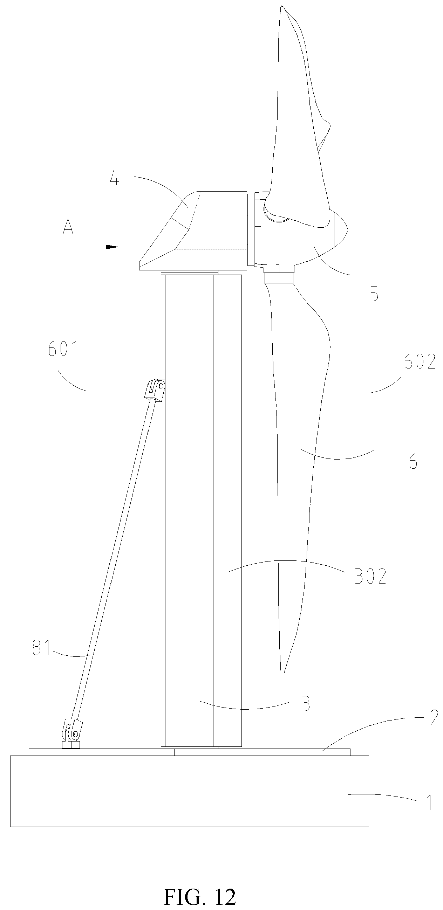

As shown in Fig. 1-20, the wind generator of the present invention comprises a revolving platform 2, rotationally connected with a base 1; a tower body 3, wherein the bottom end of the tower body 3 is connected to the revolving platform 2, the top end of the tower body 3 is fixedly provided with a generator room 4, a plurality of blades 6 are rotationally connected to the generator room 4 through a wheel hub 5, the tower body 3 has at least one windward side 301 in the circumferential direction of the tower body 3, and the bending stiffness of the windward side 301 is not less than that of the remaining sides (rather than the windward side 301) of the tower body 3; and a power source 7, used for changing the windward direction of the blades 6, wherein the power source 7 is started when airflow is to the sides rather than the windward side 301 to enable the airflow to flow to the windward side 301 while the windward direction of the blades 6 coincides with the airflow.

For a traditional wind generator, the generator room 4 and the tower body 3 are rotationally connected, so the connecting structure is complex and is poor in tightness, which affects the life of the generator and other electrical components in the generator room 4. The generator room 4 of the present invention is fixedly connected to the upper end of the tower body 3 so that the connecting structure between the generator room 4 and the tower body 3 is simpler and better in airtightness, and the service life of the generator and other electrical components in the generator room 4 is longer.

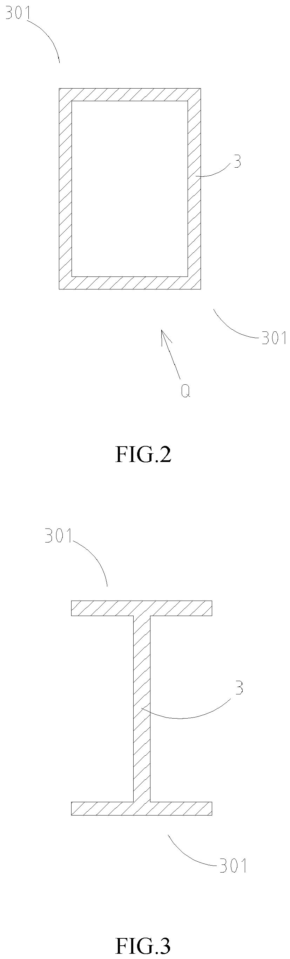

It can be understood that the bending stiffness of the windward side 301 (with reference to Fig. 2-5) of the tower body 3 is larger than that of the remaining sides of the tower body 3 and the tower body 3 can rotate relative to the base so that after the airflow direction changes, the tower body 3 is turned so that the airflow always flows towards the windward side 301 of the tower body 3. Therefore, the stiffness of the other sides of the tower body 3 can be reduced appropriately according to the actual usage so as to reduce the sizes of the other sides of the tower body 3 to achieve the purpose of reducing the weight and reduce the manufacturing cost of the tower body 3 with the reduction of the weight of the tower body 3. It should be explained that the windward side 301 can be a plane of the tower body 3 or a hypothetical plane of a plane of the tower body 3 having a certain included angle with the airflow direction so long as the windward side 301 is a plane with larger bending stiffness on the tower body 3. The windward side 301 is not limited here.

The revolving platform 2 is used for supporting the tower body 3 and fixedly connected with the tower body 3, the revolving platform 2 is rotationally connected with the base 1, and the base 1 is a structure limiting and supporting the revolving platform 2, which supports the rotation of the revolving platform 2 and limits the rotating range thereof. When the wind generator works, the blades 6 are required to face the wind direction. In the present invention, the generator room 4 and the tower body 3 are fixedly connected, and the arrangement of rotary connection between the revolving platform 2 and the base 1 enables the blades 6 to face different directions.

The yaw of the blades 6 is driven by the power source 7. It can be understood that the power source 7 is turned on or off according to the airflow direction to make the blades 6 face the airflow direction so that the windward side 301 of the tower body 3 also faces the airflow direction when the blades 6 coincides with the airflow direction (in the position where the power coefficient is optimum). At this time, the windward side 301 faces the airflow direction, the bending property of the tower body 3 is optimum, and the blades 6 are located in the direction where the power coefficient is optimum, which can make full use of the bending property of the tower body 3 while fully transforming wind energy. The power source 7 can be a mechanical device, an electrical device or wind. When wind blows the blades 6, the blades 6 move under force, and due to rotary connection between the tower body 3 and the base 1, the blades 6 will drive the generator room 4 and the tower body 3 to rotate so as to achieve the purpose of yaw.

In some embodiments, the cross sectional shape of the tower body 3 can be defined according to the actual usage so long as the bending stiffness of the windward side 301 of the tower body 3 is larger than that of the remaining sides of the tower body 3. The cross sectional shape of the tower body 3 is not limited here.

As shown in Fig. 2 to Fig. 6, in some embodiments of the present invention, the cross section of the tower body 3 is non-circular. It can be understood that the cross section of the tower body 3 is made to be non-circular so that it is not necessary to make the tower body 3 into a circular or conical barrel-shaped structure, eliminating the need of rolling the tower body 3 on a device such as rolling machine and thus reducing the process complexity.

As shown in Fig. 2, in some embodiments of the present invention, the cross section of the tower body 3 is rectangular. It can be understood that by arranging the tower body 3 into a rectangular structure, under the condition that the bending stiffness of the windward side 301 of the rectangular tower body 3 is the same as that of a traditional circular tower body 3, the weight of the rectangular tower body 3 is 30% less than that of the traditional circular tower body 3 so as to achieve the purpose of reducing the weight, and the transportation difficulty of the tower body 3 is reduced with the reduction in the weight of the tower body 3.

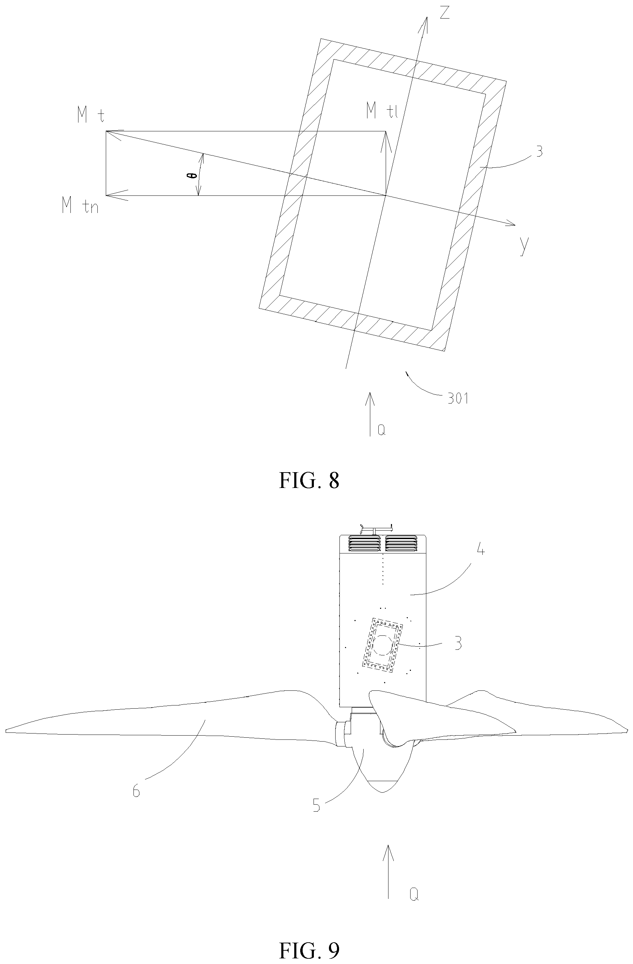

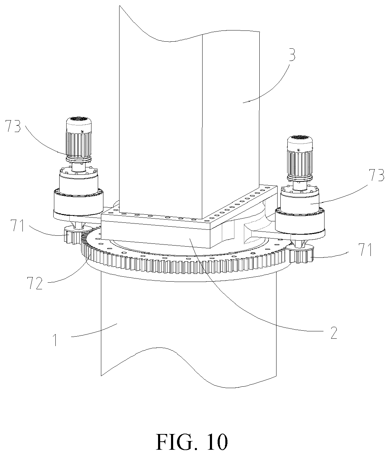

As shown in Fig. 1, Fig. 2, Fig. 8 and Fig. 9, in some embodiments, the tower body 3 with a rectangular cross section is taken as an example, the blades 6 are assumed to rotate in a clockwise direction when working, then the force on the bottom of the tower body 3 is shown in Fig. 1 and Fig. 10, and the moment on the bottom of the tower body 3 mainly comes from two parts: lateral moment Mtl on the bottom of the tower, which was generated by the rotation of the blades 6 and has the effect of swinging the whole wind generator to the right of the blades 6; and normal moment Mtn on the bottom of the tower, which is generated by the thrust of wind and has the effect of swinging the wind generator backwards; and thus the resultant moment on the tower body 3 is Mt, two orthogonal main axes exist in the cross section direction of the tower body 3 and are respectively y-axis (second main axis) and Z-axis (first main axis), wherein the bending stiffness of the Z-axis corresponding to the tower body 3 is larger. When the airflow direction changes, the tower body 3 is turned to make the Z-axis direction face the airflow at a certain angle, and the tower body 3 at this angle is the windward side 301 so that the windward side 301 with larger bending stiffness of the tower body 3 always coincides with the plane of the maximum bending moment applied to the tower body 3, this is to say, as shown in Fig. 10 and Fig. 8, the forward direction of the blades 6 faces the airflow direction A, and the slant direction of the tower body 3 faces the airflow direction A.

Wherein the Z-axis faces the airflow at a certain angle of θ, and the calculation formula of the angle θ is as follows:

$$\theta = tan^{-1}\left(\frac{M_{tl}}{M_{tn}}\right) = tan^{-1}\left(\frac{T}{F \cdot H}\right)$$

T, F and H are design parameters related to the power of the wing generator, wherein T is rotation torque of the blades 6, F is air resistance, H is height of the wheel hub 5 of the blades 6, and the range of θ is (0, 11°) based on the range (0, 0.2) of $\frac{T}{F \cdot H}$ . Therefore, in actual use, θ can be preset to 5.5°, the installation angle of the generator room 4 (the axis of the generator room 4 is parallel to the wind direction) and the tower body 3 is adjusted according to the actual load, and the adjustment range of the installation angle is set to [-1°, 12°].

As shown in Fig. 3, in some embodiments of the present invention, the cross section of the tower body 3 is I-shaped. Thus, the I-shaped tower body 3 can be welded directly from steel plates, reducing the production difficulty and increasing the production efficiency. Under the condition that the bending stiffness of the windward side 301 of the I-shaped tower body 3 is the same as that of a traditional circular tower body 3, the weight of the I-shaped tower body 3 is 70% less than that of the traditional circular tower body 3 so as to achieve the purpose of reducing the weight, and the transportation difficulty of the tower body 3 is reduced with the reduction in the weight of the tower body 3.

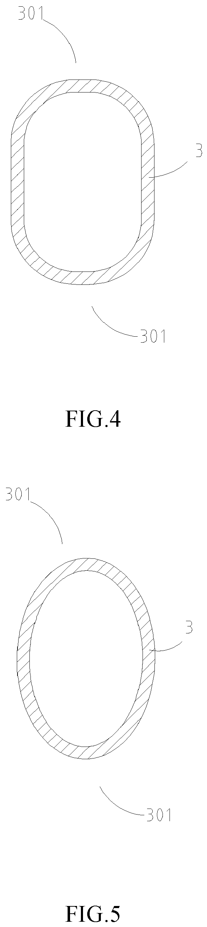

As shown in Fig. 4 to Fig. 5, in some embodiments of the present invention, the cross section of the tower body 3 is oval. It can be understood that by arranging the tower body 3 into an oval structure, under the condition that the bending stiffness of the windward side 301 of the oval tower body 3 is the same as that of a traditional circular tower body 3, the weight of the oval tower body 3 is less than that of the traditional circular tower body 3 so as to achieve the purpose of reducing the weight, and the transportation difficulty of the tower body 3 is reduced with the reduction in the weight of the tower body 3. When the cross section of the tower body 3 is oval, rectangular or I-shaped, the tower body 3 has two windward sides 301 arranged oppositely.

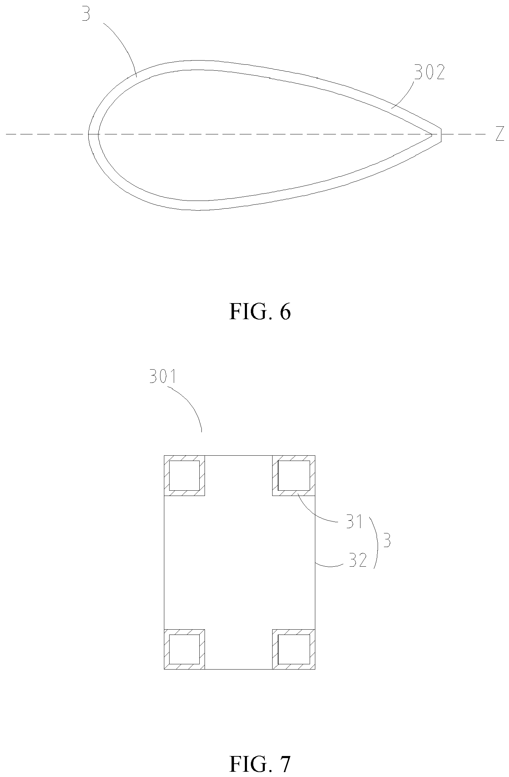

In some embodiments, the tower body 3 is hollow so as to further reduce the weight of the tower body 3. As shown in Fig. 7, the tower body 3 comprises a plurality of frames 31 arranged at intervals and a metal plate 32 wrapped on the outer sides of the frames 31. Thus, the production difficulty is reduced and the production efficiency is increased while the structural strength stability of the tower body 3 is ensured. In some embodiments, the number of the frames 31 can be four, and the metal plate 32 is wrapped on the outer sides of the four frames 31 so that the cross section of the tower body 3 is roughly rectangular to increase the stability of the tower body 3.

In some embodiments, the downwind side 602 of the tower body 3 is provided with a diversion member 302 for mitigating turbulence of airflow behind the tower body 3. Preferably, the sectional area of the tower body 3 decreases gradually in the direction near the downwind side 602 to form transition for connection with the diversion member 302, the cross section of the tower body 3 has the maximum size only in the first axis direction (i.e., the direction with maximum bending stiffness), and the weight of the tower body 3 can be further reduced. Further preferably, the sectional area of the diversion member 302 decreases gradually in the direction near the downwind side 602, or the cross section of the tower body 3 is rectangular, and the downwind side 602 of the tower body 3 is provided with an arc-shaped wind deflector. The sectional areas of the tower body 3 and the diversion member 302 decrease gradually in the direction near the downwind side 602, and such slow transition structure is conducive to wind diversion.

In some embodiments of the present invention, the diversion member 302 is integrated with the tower body 3, as shown in Fig. 6. It can be understood that the diversion member 302 also can be directly a part of the tower body 3, i.e., the cross section of the tower body 3 can be directly made into a shape with the function of diversion

As shown in Fig. 1 and Fig. 10, in some embodiments, the wind generator also comprises a detection member 10, used for detecting the flow direction and speed of airflow. The detection member 10 can be a sensor or an anemoscope, and the detection member 10 can be arranged on the generator room 4. Since the flow direction of airflow is random, the flow direction of the airflow is detected by the detection member 10, the detection result is transmitted to a control system, and the control system controls the tower body 3 to rotate or stop after receiving the detection result so as to make the airflow flow towards the windward side 301 of the tower body 3 so that the windward side 301 with strong bending stiffness of the tower body 3 can always withstand the thrust Q of the airflow to ensure the stability of the wind generator.

It can be understood that the control system can be arranged in the revolving platform 2, the control system can be electrically connected with the driving motor 73, the detection member 10 transmits the detection result to the control system, the control system controls the running state of a driving member so as to drive the revolving platform 2 to rotate on the base 1, and the revolving platform 2 rotates to drive the tower body 3 to rotate so as to make the rotation of the tower body 3 more reliable.

The revolving platform 2 and the base 1 are in transmission connection through gears. In this way, the transmission fit between the revolving platform 2 and the base 1 is more reliable. In some embodiments, the transmission structure between the revolving platform 2 and the base 1 also can be in worm wheel transmission or other transmission forms so long as the revolving platform 2 can achieve high torque and low speed rotation. The form of the transmission structure is not limited here. The base 1 is provided with a matching gear ring 72 arranged around the revolving platform 2, the driving member is the driving motor 73, the driving motor 73 is provided with a driving gear 71, and the driving gear 71 is engaged with the matching gear ring 72. It can be understood that the driving member 71 is installed on the motor shaft of the driving motor 73, the rotation of the driving gear 71 is controlled through control on the forward rotation and reverse rotation of the driving motor 73, and due to engagement between the driving gear 71 and the matching gear ring 72, the revolving platform 2 can be driven to rotate relative to the base 1 when the driving gear 71 rotates, so as to make the rotation of the tower body 3 more reliable.

In some embodiments, a plurality of driving motors 73 can be arranged, and the plurality of driving motors 73 are arranged at intervals along the circumferential direction of the revolving platform 2 so as to ensure the rotational stability of the revolving platform 2. In the present embodiment, the number of the driving motors 73 is two. The generator room 4 of the wind generator is fixedly connected to the upper end of the tower body 3, and the cross section of the tower body 3 has two orthogonal main axes which are respectively corresponding to two different bending stiffness directions. The wind generator is provided with an anemoscope used for detecting the flow direction and speed of airflow, and the tower body 3 rotates according to the measurement result of the anemoscope to make the main plane face the airflow at a certain angle. After the airflow direction changes, the main plane with the maximum bending stiffness of the tower body 3 can always coincide with the plane with the maximum bending moment applied to the tower body 3. Therefore, the stiffness of the other sides of the tower body 3 can be reduced appropriately according to the actual usage so as to reduce the sizes of the other sides of the tower body 3 to achieve the purposes of reducing the weight and cost and simplifying the connection between the generator room 4 and the tower body 3.

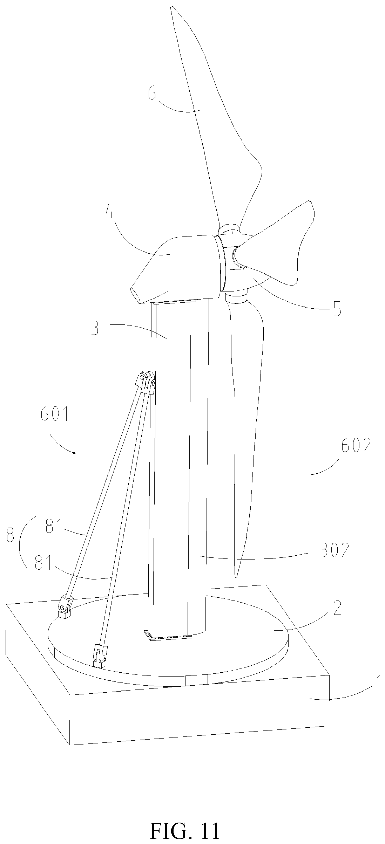

As shown in Fig. 11-12, in some embodiments, the plurality of blades 6 are located on the downwind side 602 of the tower body 3; and the power source 7 is airflow, and the revolving platform 2 is driven by the blades 6 by wind to rotate relative to the base 1. The wheel hub 5 and the blades 6 on the generator room 4 are connected to a rotating platform through the tower body 3, the rotating platform can be rotationally arranged on the base 1 through support bearings, and the base 1 can be fixedly connected to the ground. When the airflow direction A changes, the blades 6 will swing with the airflow so that the airflow can drive the tower body 3 and the revolving platform 26 to rotate on the base 1 through the blades 6 so that no yaw device and system needs to be installed so as to reduce the cost and the weight of the generator room 4 and make the structure of the tower body 3 more stable. That is to say, automatic yaw can be realized, which saves the cost of a yaw device and system, reduces the weight of the generator room 4 and improves the dynamic stiffness.

Meanwhile, the blades 6 are located on the downwind side 602 of the tower body 3 and thus rotate around the main axis, and the main axis is parallel to the airflow direction A. In the prior art, to prevent the blades 6 from hitting the tower body 3, an upwind type wind generator usually adopts a method of tilting the main axis upward by 3-5° to open the distance between the ends of the blades 6 and the tower body 3, which will reduce the swept area of wind wheels, resulting in wind energy absorption loss. In the structure of the present invention where the blades 6 are arranged on the downwind side 602, the airflow can flow from the weather side 601 of the tower body 3 to the downwind side 602 of the tower body 3. When the blades 6 are exposed to wind, the blades 6 are away from the tower body 3 under force, which can reduce the risk of interference between the blades 6 and the tower body 3, and the safety performance of the generator group is improved, which can avoid the use of the structure tilting the main axis upward by 3-5° to ensure the swept area of the plurality of blades 6 and avoid wind energy loss caused by main axis tilting.

It can be understood that in the structure shown in Fig. 11-12, the diversion member 302 has the effects of preventing or mitigating turbulence of airflow behind the tower body 3 to avoid influence on the efficiency of the wind generator and enabling the blades 6 to drive the generator room 4, the tower body 3 and the revolving platform 2 to rotate in the base 1 under the action of force to realize automatic yaw. That is to say, the arrangement of the diversion member 302 can reduce influence of turbulence on the blades 6 located on the downwind side 602 of the tower body 3 so as to increase wind power on the blades 6 so that the blades 6 can swing better with airflow and the airflow can better drive the tower body 3 and the revolving platform 2 to rotate on the base 1 through the blades 6 to realize automatic yaw.

In some embodiments, with reference to Fig. 13-14, the wind generator also comprises a pretensioning member 8, one end of the pretensioning member 8 is connected to the tower body 3, and the other end is connected to the revolving platform 2; and the pretensioning member 8 is located on the weather side 601 of the tower body 3. It can be understood that on the premise that the pretensioning member 8 located on the weather side 601 does not interfere with the rotation of the blades 6, the stress state of the cross section of the tower body 3 under wind load can be improved by applying certain pretension to the pretensioning member 8 by respectively connecting both ends of the pretensioning member 8 to the tower body 3 and the revolving platform 2, and the tension generated by the pretensioning member 8 can offset part of the bending moment caused by wind power on the tower body 3, reduce the load of the tower body 3, reduce the weight of the tower body 3, and enhance the stability of the tower body 3 so as to enhance the stiffness and strength of the whole structure of the wind generator.

In the arrangement of the pretensioning member 8, on the premise of not interfering with the rotation of the blades 6, the inclined angle of the pretensioning member 8 is relatively large, which is beneficial to improving the stability of the tower body 3. In case of space or other installation limitations (for example, to reduce the size of the revolving platform 2 or the base 1), the pretensioning member 8 can be arranged according to Fig. 13-14 to reduce the angle of the pretensioning member, which does not interfere with the rotation of the blades 6 and guarantees pretension. In this installation method of the pretensioning member, the role of the pretensioning member 8 is mainly reflected in applying a bending moment to the tower body 3 to change the initial stress state of the tower body 3 and increase the ability to resist wind load.

The pretensioning bending moment generated by pre-tension is:

$$M = F_t \cdot \cos\theta \cdot a_2 + F_t \cdot \sin\theta \cdot H$$

$$\theta = arctan\left(\frac{a_1 - a_2}{H}\right)$$

Wherein:

$a_1$: the distance from the connecting point of the pretensioning member and the revolving platform to the second main axis plane ZO of the tower;
$a_2$: the distance from a pretensioning point N to the second main axis plane ZO of the tower;
H: the distance from the pretensioning point N to the bottom surface of the tower;
$\theta$: the included angle between the pretensioning member and the centerline of the tower;
$F_t$: the pretension of the pretensioning member;

It should be understood that the second main axis plane ZO is a vertical plane where the second main axis Y is located. Similarly, the first main axis plane is a vertical plane where the first main axis Z is located. With reference to Fig. 15, the first main axis plane is vertical to the second main axis plane ZO.

When $a_1 > a_2$, $\theta$ is positive; and when $a_1 = a_2$, $\theta$ is zero, and at this time, the pretensioning member is parallel to the length of the tower;

$$tan\theta = -\frac{a_2}{H}$$

When $a_1 < a_2$, $\theta$ is negative, and when $tan\theta = -\frac{a_2}{H}$, the pretensioning bending moment is M=0;

To produce the pretensioning effect, i.e., M>0, the following formula shall be met:

$$\theta = arctan\left(\frac{a_1 - a_2}{H}\right) > arctan\left(-\frac{a_2}{H}\right)$$

That is $a_1 > 0$, and the connecting point of the pretensioning member and the revolving platform shall be arranged on the windward side.

It can be seen that under the condition of setting the tension of the pretensioning member 8 and without affecting the rotation of the blades 6, the greater the distance of $a_1$ is, the greater the bending moment applied is. Therefore, the distance of $a_1$ is set according to the design requirements of the wind generator. Reference factors involve the distance between the blades 6 and the tower body 3, the size of the revolving platform 2 or the base 1, the size and quantity of pretensioning members, etc.

In some embodiments, the pretensioning member 8 comprises at least one pretensioning rope or pretensioning rod which is coplanar with the wind axis. Combined with Fig. 15, the first main axis Z is orthogonal to the second main axis Y, and the wind axis B is a wind axis passing through the orthogonal point. It can be understood that the pretensioning point N of the pretensioning rope or pretensioning rod and the connecting point of the revolving platform 2 are both arranged on the wind axis B. At this time, the effect of offsetting wind power by the pretension is maximized and the pretensioning effect is the best. In some embodiments, a plurality of pretensioning ropes or pretensioning rods can be arranged with wind axis as a symmetric axis to maximize the pretensioning effect of the pretensioning member 8.

In some embodiments, to further reduce the size of the revolving platform 2, as shown in Fig. 14, the pretensioning member 8 can be connected with an extending support edge 201 extending outwards from the revolving platform 2.

In some embodiments, when the pretensioning member 8 has sufficient installation space (the blades 6 are arranged on the downwind side 602), with reference to Fig. 11-12, the pretensioning member 8 comprises a plurality of pretensioning steel ropes 81 (of course, pretensioning rods can be used instead), the upper end of each of the pretensioning steel ropes 81 is connected to the tower body 3, and the lower ends of the plurality of pretensioning ropes 81 are arranged at intervals on the revolving platform 2. In some embodiments, the weather side 601 of the tower body 3 is provided with two pretensioning steel ropes 81 at intervals. It can be understood that more than two pretensioning steel ropes 81 are used to apply pretension to pull the tower body 3 respectively, which is equivalent to applying a certain force in any direction around the weather side 601 to pull the tower body 3, increasing the stability of the tower body 3.

As shown in Fig. 16, in some embodiments of the present invention, in any θ direction, the equivalent stiffness formula of two steel ropes 81 is:

$$k\theta = k \cdot \cos^2 \theta + k \cdot \cos^2 (\theta + 2\beta)$$

Wherein kθ is equivalent stiffness, and k is stiffness of two steel ropes 81.

In some embodiments of the present invention, the initial stress state of the cross section 3 of the tower body 3 below the connecting point of the pretensioning steel ropes 81 and the tower body 3 can be changed through the pretensioning steel ropes 81, and the pretensioning bending moment generated by pretension is:

$$T = \sum_{i=1}^{n} F_{ti} \cdot \frac{cos\beta_i \cdot h}{\sqrt{1 + \left(\frac{h}{a_i}\right)^2}}$$

Wherein n is the number of steel ropes, h is the height of the position where the steel ropes are connected to the tower body 3, $a_i$ is the distance from the connecting point of each steel rope on the revolving platform 2 to the tower body 3, $\beta_i$ is an included angle between each steel rope and the main axis centerline of the generator room 4, $i$ is the $i$th rope, $i$ is from 1 to n, and *Fti* is pretension applied by the $i$th rope.

The number n of the pretensioning steel ropes 81 is random, and the connecting point on the revolving platform 2 can be arranged at random, i.e., each pretensioning steel rope 81 can take different a and β. Especially, when n=1, β is 0°, each pretensioning steel rope 81 is in the same plane as the main axis centerline of the generator room 4; and when n=2, β is 45° ideally, which can play a role of pulling the tower body 3 in any direction.

As shown in Fig. 17-21, in some embodiments, the revolving platform 2 is in a shape of a convex column and is provided with an airtight cavity inside, part of the outer wall of the revolving platform 2 is rotationally sheathed with a base 1, the base 1 is annular and is provided with an edge extending inwards horizontally on the top end, the revolving platform 2 has floatability and can float on the sea, and the base 1 is located above the sea. With reference to the structure of the base 1 shown in Fig. 18-20, the outer edge of the base 1 protrudes from the revolving platform 2, which can make the base 1 located on the sea or at least part of the base 1 located on the sea, having a balanced and stable effect and keeping the revolving platform 2 not side flipping.

It should be noted that in some embodiments, the base 1 can be designed to be floating in place of the floating revolving platform 2, the floating base is welded from steel plates and internally reinforced with frames 31, the floating base is provided with an airtight cavity inside and rotationally sleeved on the outer wall of the revolving platform 2, at this time, the floating base has a floating function, the revolving platform 2 can be a platform without a floating function, and the whole structure can be supported by the floating base. Of course, the structure also can be designed so that the revolving platform 2 and the base 1 are both floating.

In some embodiments, the revolving platform 2 can be welded from steel plates or other materials, with the purpose of forming an airtight cavity, having a certain ability of floating on the sea and having certain support performance to support a wind generator. The top surface of the revolving platform 2 is preferably designed to be higher than that of the base 1 so that the revolving platform 2 is higher, thus reducing the possibility of seawater immersion. Of course, the top surface of the revolving platform 2 also can be designed to be lower than or equal to that of the base 1, and the revolving platform 2 and the base 1 are made of immersion-resistant materials. Preferably, the revolving platform 2 is in rotary seal connection with the base 1, and dynamic seal is rotatable and ensures tightness, which prevents seawater from entering the internal mechanism to cause erosion or influence on normal operation.

In some embodiments, the base 1 is connected to seabed through a fixed structure 9, the base 1 can be selectively fixed in the desired position through the fixed structure 9; and under the tension of the fixed structure 9, when the revolving platform 2 is forced to rotate by external forces, the fixed structure 9 can pull the base 1 to limit the movement of the revolving platform 2 so that the revolving platform 2 can rotate relative to the base 1. Preferably, the rotary connection between the base 1 and the revolving platform 2 is limit rotary connection, i.e., the base 1 is difficult to separate from the revolving platform 2, which can ensure the horizontal and vertical movement of the base 1 relative to the revolving platform 2 so as to ensure the relative rotation of the revolving platform 2 without side flipping. Further preferably, the base 1 also can be designed into an airtight cavity structure, or the base 1 with floatability can be selected, enhancing the buoyancy effect on seawater and improving the floating support performance of the whole structure.

As shown in Fig. 18, in some embodiments, the fixed structure 9 can be a rigid foundation pile with adjustable length, such as a rod or a tube, at least two foundation piles are arranged and uniformly distributed along the circumferential direction of the bottom of the base 1, the top end of each foundation pile is connected with the bottom surface of the base 1, the bottom end is connected with seabed, and adjustable length can realize control on the volume of the revolving platform 2 immersed in seawater so as to adjust the buoyancy of the revolving platform 2.

In some embodiments, the fixed structure 9 also can be an anchor cable 91 or cable, at least two anchor cables 91 or cables are arranged and uniformly distributed along the circumferential direction of the bottom of the base 1, one end of each anchor cable 91 or cable is connected with the bottom surface of the base 1, the other end is connected with seabed, the end of the anchor cable 91 or cable connected to the base 1 can be connected through a tensioning device which can adjust tensioning or loosening of the anchor cable 91 or cable, the height of the base 1 is adjusted by tightening or loosening the anchor cable 91 or cable to adjust the buoyancy of the revolving platform 2, the anchor cable 91 or cable is disconnected from seabed when it is necessary to move, and the device is pulled by a boat to an appropriate position to achieve selection or adjustment of the position of the generator group.

In some embodiments, the inner wall of the base 1 is provided with a plurality of sliding countervanes 101 which are uniformly distributed along the vertical inner wall and horizontal inner wall of the base 1, as shown in Fig. 20, and the sliding countervanes 101 are made of wear-resistant materials with good smoothness (small friction), for example, wear-resistant ceramic sheet. In order to facilitate production, installation and replacement, each sliding countervane 101 can be made into a single piece and then embedded in and fixedly installed on the inner side of the base 1. The base 1 is rotationally connected with the outer wall of the revolving platform 2 through the sliding countervanes, and the revolving platform 2 is in contact with and slides relative to the sliding countervanes 101 to realize rotary motion. The arrangement of the sliding countervanes 101 can reduce the contact area and friction between the revolving platform 2 and the base 1, which is beneficial to the relative rotation and can avoid the problem of fast wear caused by direct contact therebetween. The sliding countervanes 101 are detachably installed, which is convenient for replacement.

When the floating revolving platform 2 is used on the sea, the revolving platform 2 can be forced to rotate. The wind generator will drive the revolving platform 2 to rotate under wind power to realize yaw. To avoid cable ringing caused by excessive yaw turning angle, an angular displacement sensor and a yaw motor can be arranged at the rotational connection of the revolving platform 2 and the base 1. The use of the angular displacement sensor and the yaw motor for realizing yaw belongs to the prior art and will not be repeated here.

The revolving platform 2 of the wind generator of the present invention can be used in one-to-one correspondence to the tower body 3, or the revolving platform 2 can be provided with a plurality of wind generators. During application to a wind generator group, the generator group is composed of a plurality of wind generators arranged on the revolving platform 2 in an appropriate mode.

The generator group can be arranged appropriately as required on the premise that the wind generators do not interfere with each other. The wind generators can be arranged in rows and columns or can be arranged in columns. A plurality of leeward wind generators are arranged in rows, and the row direction is vertical to or has a positive and negative deviation of not greater than 30° from the direction of the first main axis Z of the tower body 3 of the wind generator. When the wind generators are arranged in columns, the column direction is parallel to or has a positive and negative deviation of not greater than 30° from the direction of the first main axis Z of the tower body 3 of a leeward wind generator.

In some embodiments, a structure with the blades 6 located on the downwind side 602 is preferred for the wind generator, the revolving platform 2 is actuated by the generator group by wind, and the direction of the first main axis Z of the tower body 3 of the wind generator is made parallel to the airflow direction A. It can be understood that when the generator group is blown by wind, if the direction of the first main axis Z has an included angle with the airflow direction A, the blades 6 of the wind generator will be subjected to greater torque, at this time, the wind generator will drive the revolving platform 2 to rotate, the revolving platform 2 is forced to rotate, and the base 1 is pulled, so the revolving platform 2 will rotate relative to the base 1 to an angle at which the wind generator is subjected to minimum torque, i.e., the torque is minimum when the direction of the first main axis Z is parallel to the airflow direction A.

It should be noted that the plurality of wind generators can be arranged as required, such as maritime wind energy density, and reasonably designed according to the generated power of the wind generator, so as to realize maximum generating capacity and minimum wake influence; power transmission and distribution schemes and convenient installation conditions are taken into full consideration; and the arrangement space shall not be too large, so as to save the area of the revolving platform 2.

In some embodiments, the generator group comprises at least two rows of wind generators, wind generators in two adjacent rows are arranged in a staggered manner, which ensures more uniform stress on the revolving platform 2 in all directions and improves the overall balance of the device, and the row direction is vertical to the first main axis Z of the tower body 3 of the wind generator and the airflow direction A. In order not to affect the separate operation of the wind generator, the spacing between the two adjacent rows can be set to not less than the height of the tower body 3 of the wind generator, and the spacing between adjacent wind generators in the same row can be set to not less than 2N, and N is the turning radius of the blades 6 of the wind generator, which can ensure that the wind generators will not interfere with each other when working and improve the generating efficiency of the generator group.

In some embodiments, as shown in Fig. 17, Fig. 21 and Fig. 22, when the generator group comprises seven wind generators, the wind generators can be arranged in three rows in a 2-3-2 form, wherein six wind generators at both ends of each row are respectively located at the corners of a regular hexagon, and one wind generator is located in the centroid of the regular hexagon. Such distribution can ensure uniform stress on all positions of the revolving platform 2 and improve the overall balance of the device.

In some embodiments, to cope with shaking caused by sea waves and sea wind and prevent the head of each wind generator from swinging too much, the generator group also comprises connecting assemblies 801 for connecting wind generators in pairs, that is, connecting any two wind generators in the generator group without interfering with the rotation of the blades 6. In some embodiments, a plurality of connecting assemblies 801 are arranged, and the connecting assemblies 801 can be linear steel frame beams with better steadiness or lighter pre-tensioned steel ropes 81. With reference to Fig. 21-22, preferably, when the wind generators are arranged in rows, the adjacent wind generators in the same row are connected by the connecting assemblies 801 which are arranged horizontally and are vertical to the airflow direction A, and both ends of the connecting assemblies 801 are respectively connected to the top ends of the tower bodies 3 of the adjacent wind generators. In this way, adjacent wind generators can be connected without affecting the rotation of the blades 6, thus enhancing the stability of the generator group.

Those skilled in the art can easily understand that the technical features of the above embodiments can be freely combined and superimposed, and for the sake of brevity of the description, all possible combinations of the technical features in the above embodiments are not described. Some amendments or modifications to the above disclosed technical content can be made into equivalent embodiments without departing from the scope of the technical solution of the present invention. However, any simple amendment, equivalent change and modification made to the above embodiments according to the technical essence of the present invention without departing from the content of the technical solution of the present invention shall still belong to the scope of the technical solutions of the present invention.

## Claims

1. A wind generator, comprising:

   a revolving platform (2), rotationally connected with a base (1);
   a tower body (3), wherein the bottom end of the tower body (3) is connected to the revolving platform (2), the top end of the tower body (3) is fixedly provided with a generator room (4), and a plurality of blades (6) are rotationally connected to the generator room (4) through a wheel hub (5); and the tower body (3) has at least one windward side (301) in the circumferential direction of the tower body (3), and the bending stiffness of the windward side (301) is not less than that of the remaining sides of the tower body (3);

a power source (7), used for changing the windward direction of the blades (6);
when airflow is to the sides rather than the windward side (301), the power source (7) is started to enable the airflow to flow to the windward side (301) while the windward direction of the blades (6) coincides with the airflow.

2. The wind generator according to claim 1, wherein the cross section of the tower body (3) is non-circular; and the cross section of the tower body (3) is oval, rectangular or I-shaped.

3. The wind generator according to claim 1, wherein the downwind side (602) of the tower body (3) is provided with a diversion member (302) for mitigating turbulence of airflow behind the tower body (3).

4. The wind generator according to claim 3, wherein the diversion member (302) is integrated with the tower body (3).

5. The wind generator according to claim 1, further comprising:

    a detection member (10), used for detecting the flow direction and speed of airflow;
    the power source (7) is a driving motor (73), the revolving platform (2) and the base (1) are in transmission connection through gears, the base (1) is provided with a matching gear ring (72) arranged around the revolving platform (2), the driving motor (73) is provided with a driving gear (71), and the driving gear (71) is engaged with the matching gear ring (72);
    the driving motor (73) adjusts the direction of the windward side 301 according to the detection results of the detection member (10).

6. The wind generator according to claim 1, wherein the plurality of blades (6) are located on the downwind side (602) of the tower body (3); and the power source (7) is airflow, and the revolving platform (2) is driven by the blades (6) by wind to rotate relative to the base (1).

7. The wind generator according to claim 1, wherein the wind generator also comprises a pretensioning member (8), one end of the pretensioning member (8) is connected to the tower body (3), and the other end is connected to the revolving platform (2); and the pretensioning member (8) is located on the weather side (601) of the tower body (3).

8. The wind generator according to claim 7, wherein the included angle between the pretensioning member (8) and the centerline of the tower body (3) is $\theta$:

$$\theta = arctan\left(\frac{a_1 - a_2}{H}\right) > arctan\left(-\frac{a_2}{H}\right)$$

wherein:

    $a_1$: the distance from the connecting point of the pretensioning member and the revolving platform to the second main axis plane of the tower;
    $a_2$: the distance from a pretensioning point N to the second main axis plane of the tower;
    $H$: the distance from the pretensioning point N to the bottom surface of the tower;
    $F_i$: the pretension of the pretensioning member.

9. The wind generator according to claim 8, wherein the pretensioning member (8) comprises at least one pretensioning rope or pretensioning rod which is coplanar with the wind axis.

10. The wind generator according to claim 1, wherein the revolving platform (2) is in a shape of a convex column and is provided with an airtight cavity inside, the base (1) is annular in the inner part and is provided with an edge extending inwards horizontally on the top end, and the base (1) is rotationally sleeved on part of the outer wall of the revolving platform (2); and the revolving platform (2) has floatability and can float on the sea, and the base (1) is located above the sea.

11. The wind generator according to claim 10, further comprising:
    a fixed structure (9), used for connecting the base (1) and seabed.

12. The wind generator according to claim 11, wherein the fixed structure (9) is a rigid foundation pile or flexible anchor rope with adjustable length, at least two rigid foundation piles or flexible anchor ropes are arranged and uniformly distributed along the circumferential direction of the bottom of the base (1), one end is connected with the bottom surface of the base (1), and the other end is connected with seabed.

**13.** The wind generator according to claim 10, wherein the inner wall of the base (1) is provided with a plurality of sliding countervanes (101) which are uniformly distributed along the circumferential direction of the annular shape.

**14.** A wind generator group, composed of a plurality of wind generators of any one of claims 1-13, which are arranged on the revolving platform (2) in an appropriate mode, wherein the wind generator group comprises connecting assemblies used for connecting wind generators in pairs, a plurality of connecting assemblies (801) are arranged and can be used for connecting any two adjacent wind generators without interfering with the rotation of the blades (6), and the connecting assemblies (801) are beams or steel ropes (81).

**15.** The wind generator group according to claim 14, wherein a plurality of wind generators are arranged in rows or in columns, the direction of the horizontal line of the same row is vertical to or has a positive and negative deviation of not greater than 30° from the first main axis (Z) of the tower body (3) of a leeward wind generator in case of arrangement in rows, and the column direction is parallel to or has a positive and negative deviation of not greater than 30° from the first main axis (Z) of the tower body (3) of a leeward wind generator in case of arrangement in columns.

FIG.1

301

3

301

Q

FIG.2

301

3

301

FIG.3

301

3

301

FIG.4

301

3

301

FIG.5

3

302

Z

FIG. 6

301

31
32
3

FIG. 7

FIG. 8

FIG. 9

FIG. 10

FIG. 11

FIG. 12

FIG. 13

FIG. 14

FIG. 15

FIG. 16

FIG. 17

FIG. 18

FIG. 19

FIG. 20

FIG. 21

FIG. 22

Europäisches Patentamt

European Patent Office

Office européen des brevets

# EUROPEAN SEARCH REPORT

Application Number

EP 22 18 3062

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 112 943 551 A (NINGBO ADVANCED INFORMATION SERVICES CO LTD) 11 June 2021 (2021-06-11) | 1,2,5 | INV. F03D13/20 F03D7/04 |
| Y | * paragraphs [0046], [0067], [0068], [0072] * * figures 1-3,7 * | 7-9,13 | ADD. F03D13/25 |
| X | EP 3 712 428 A1 (SYROVY GEORGE J [US]) 23 September 2020 (2020-09-23) * paragraphs [0001], [0030], [0033], [0046] * * figures 11,12 * | 1,2,14, 15 | |
| X | WO 2010/098813 A1 (ENER2 LLC [US]; MOSER GEORGE [US] ET AL.) 2 September 2010 (2010-09-02) * paragraphs [0069], [0073], [0076], [0089] * * figures 5,16 * | 1,5, 10-12, 14,15 | |
| X | CN 112 922 789 A (NINGBO ADVANCED INFORMATION SERVICES CO LTD) 8 June 2021 (2021-06-08) * paragraphs [0048], [0055], [0057] * * figures 1,2,5 * | 1,2,5 | TECHNICAL FIELDS SEARCHED (IPC) |
| X | GB 780 381 A (HAVILLAND PROPELLERS LTD DE; ROBERT JOHN PERDUE) 31 July 1957 (1957-07-31) * page 2, lines 37-45,54-61,66-71,91-97 * * figures 1,2 * | 1,3,4,6 | B63B E02B E02D F03D E04H |
| Y | WO 2015/171347 A1 (GOLDSTEIN LEONID [US]) 12 November 2015 (2015-11-12) * figures 1,5 * | 7-9 | |

-/--

The present search report has been drawn up for all claims

| Place of search | Date of completion of the search | Examiner |
|---|---|---|
| The Hague | 7 October 2022 | Pasquet, Pierre |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

......................................................................................

& : member of the same patent family, corresponding document

EPO FORM 1503 03.82 (P04C01)

Europäisches Patentamt

European Patent Office

Office européen des brevets

## EUROPEAN SEARCH REPORT

Application Number

EP 22 18 3062

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | EP 2 444 661 A1 (MITSUBISHI HEAVY IND LTD [JP]) 25 April 2012 (2012-04-25) <br> * paragraph [0025] * <br> * figures 2A,2B * <br> ----- | 13 | |

**TECHNICAL FIELDS SEARCHED (IPC)**

The present search report has been drawn up for all claims

| Place of search | Date of completion of the search | Examiner |
|---|---|---|
| The Hague | 7 October 2022 | Pasquet, Pierre |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

........................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 18 3062

This annex lists the patent family members relating to the patent documents cited in the above-mentioned European search report.
The members are as contained in the European Patent Office EDP file on
The European Patent Office is in no way liable for these particulars which are merely given for the purpose of information.

07-10-2022

| Patent document cited in search report | | Publication date | Patent family member(s) | | Publication date |
|---|---|---|---|---|---|
| CN 112943551 | A | 11-06-2021 | NONE | | |
| EP 3712428 | A1 | 23-09-2020 | EP | 3712428 A1 | 23-09-2020 |
| | | | US | 2020300224 A1 | 24-09-2020 |
| WO 2010098813 | A1 | 02-09-2010 | NONE | | |
| CN 112922789 | A | 08-06-2021 | NONE | | |
| GB 780381 | A | 31-07-1957 | NONE | | |
| WO 2015171347 | A1 | 12-11-2015 | NONE | | |
| EP 2444661 | A1 | 25-04-2012 | AU | 2009348174 A1 | 23-12-2010 |
| | | | BR | PI0921939 A2 | 05-01-2016 |
| | | | CA | 2744649 A1 | 23-12-2010 |
| | | | CN | 102224340 A | 19-10-2011 |
| | | | EP | 2444661 A1 | 25-04-2012 |
| | | | JP | WO2010146654 A1 | 29-11-2012 |
| | | | KR | 20110089293 A | 05-08-2011 |
| | | | US | 2011254281 A1 | 20-10-2011 |
| | | | WO | 2010146654 A1 | 23-12-2010 |

EPO FORM P0459

For more details about this annex : see Official Journal of the European Patent Office, No. 12/82